Europäisches Patentamt

European Patent Office

Office européen des brevets

(19)

(11) Publication number: **0 187 423**
**A2**

(12) # EUROPEAN PATENT APPLICATION

(21) Application number: **85202146.8**

(22) Date of filing: **30.12.85**

(51) Int. Cl.⁴: **C 05 D 9/02**

(30) Priority: **09.01.85 BE 214312**

(43) Date of publication of application:
**16.07.86 Bulletin 86/29**

(84) Designated Contracting States:
**AT CH DE FR GB IT LI LU NL SE**

(71) Applicant: **Belgium Marketing Services N.V.**
**Frankrijklei 65**
**B-2000 Antwerpen(BE)**

(72) Inventor: **Camerlynck, Rudy**
**Polderdreef 60**
**B-9720 De Pinte(BE)**

(72) Inventor: **de Potter, Pierre**
**Van Huynegemstraat 18**
**B-1090 Brussels(BE)**

(74) Representative: **Pieraerts, Jacques et al,**
**Bureau Gevers S.A. rue de Livourne 7, Bte. 1**
**B-1050 Bruxelles(BE)**

(54) **Dry leaf-fertilizing components.**

(57) There are described dry leaf-fertilizing components, which are comprised of a chelating compound of at least one component from the group comprising salts of alkaline metals, alkaline-earth metals and ammonium salts of amino-polycarbonic acids, polyaminopolycarbonic acids, hydroxy-polycarbonic acids, polyhydroxypolycarbonic acids, polyols, with any metal salt wherein the metal element is present as cation or anion, and boron and/or molybednum compounds are present or not.

EP 0 187 423 A2

## Dry leaf-fertilizing components

This invention relates to dry leaf-fertilizing components.

Plants require for their normal development, various inorganic elements without which cell and tissue growth is impossible.

Among the essential nutrient elements, the elements iron (Fe), manganese (Mn), zinc (Zn), copper (Cu), boron (B) and molybdenum (Mo) take a place apart as said elements are present at very low concentrations in the plant, but are indispensable to activate specifically a series enzymatic systems.

A number of physico-chemical parameters, such as the pH, the redox potential, a high carbonate content, the weather conditions, excess fertilizing with N.P.K. as main components, may be the cause trace elements present in the soil, are unavailable to the plants.

A clear distinction should thus be made between the total amounts of trace elements present in the soil and the fractions thereof which are available to the plants. Only those amounts which are available to the plants are of importance for agricultural purposes.

Equilibrium reactions in the soil determine how much from each element is finally to be considered for uptake by the plant. With a disturbed absorption, a series physiological chances occur in the plant, which lead to leaf discolouring, growth reduction, substantial decrease in yield, and in extreme cases this leads to the plant dying.

The speed wherewith a deficiency phenomenon may be corrected, is of vital importance for the final yield. A deficiency condition is best corrected by leaf fertilizing. Thereby intricate soil reactions are eliminated, such as fixation and precipitation, moreover no irrigation is required to bring the elements to the root area, said elements are fed where the plant most requires it, and the response time is markedly shortened as no long path has to be followed from the roots to the leaves. There is also no diluting effect as this is the case in the soil, a leaf treatment turns out to be many times more favourable as regards time and money.

The invention thus has for specific object to provide dry leaf-fertilizing components which have a high stability, even after being mixed with water. The invention has further for object to make possible dry preparation of stable solid trace element preparations which after solubilization into water or dissolution in the soil results, in trace elements under various chemical species (free ions and chelated metals which may be anionic, cationic or neutral).

To obtain this according to the invention, the leaf-fertilizing components according to the invention are comprised of a chelating compound from at least one component from that group which comprises salts from alkaline metals, alkaline-earth metals and ammonium salts of aminopolycarbonic acids, polyaminopolycarbonic acids, hydroxypolycarbonic acids, polyhydroxypolycarbonic acids, polyols, with a metal salt wherein a metal element is present as cation or anion, and boron and/or molybdenum compounds may be present or not.

Still according to the invention, use is made as alkaline metal salt of the chelating compound, of a sodium, potassium, caesium or rubidium salt.

As alkaline-earth metal salt of the chelating compound, use is made of a magnesium, calcium, strontium or barium salt.

Other details and advantages of the invention will stand out from the following description, given by way of non limitative example.

Conventional techniques consist of applying separately the trace elements :

a) dissolved in a salt from (sulfates, nitrates, chlorides for the cations ; ammonium or sodium salts for the anions).

b) In a chelated form for the cations (the metal is then present as a heterocyclic structure).

Both techniques have serious drawbacks.

Among such drawbacks, there may be mentioned:

a) <u>Solutions of mineral salts.</u> They are well absorbed, but they only have a local action. The leaf being treated may show spots. Moreover in dissolved mixtures of various trace elements, salts appear which precipitate very rapidly and such mixtures are generally not compatible with leaf-fertilizing formulations which contain urea phosphates, or which have a relatively high pH ;

b) <u>Pure chelate solutions.</u> They are well translocated, but they are not well absorbed. Only those elements Fe, Cu, Zn and Mn are available commercially as chelates. boron and molybdenum are available up to now only as salts ;

c) <u>Chemical forms.</u> The biological activity of an element is mainly determined by the chemical form. As regards to the case of absorption, it has been ascertained that with leaf feeding as a rule, uncharged forms are better absorbed than charged forms, and that for charged forms the cations are better absorbed than anions. Absorbed free cations do rapidly combine with enzymes and other plant components. Free ions are practically not translocated and have thus mainly a local action.

Chelated anions are less well absorbed, but they are well translocated. The chelated forms compete during the conveying thereof with other metal cations such as Ca and Mg which are present in much higher proportions in the plant sap. They are thereby slowly released.

At the same time the chelates which are generally metallo-polyaminocarbonic acids, are subjected to metabolic processes and they are also thereby slowly decomposed with the release of the metal element during the travel thereof in the plant sap. Boron applied in a foliar spray under conventional conditions is one of those trace elements which are worst translocated.

On the other hand it is known that boron enhances sugar translocation. This is imputed to chelate forming with sugars. Boron fed as leaf-fertilizer chelated with hexitols or some polyols, which have relative to normal sugars, a much higher stability, should better translocate the boron. At cell level, there prevails a balance between the $Fe^{2+}$ and the $Fe^{3+}$.

This balance is of great importance for the maintenance of a series enzymatic oxydoreduction reaction. Plants may show under some conditions, an iron chlorosis, even if the iron concentration lies is markedly higher than in healthy plants.

All the iron present in the cells is then physiologically inactive and precipitated in the cells. This is caused by a disturbance in the $Fe^{2+}/Fe^{3+}$ ratio. There is substantially no more $Fe^{2+}$ present. When leaf-fertilizing, care should be taken that there is a favourable $Fe^{2+}/Fe^{3+}$ relation, if the aim is to eliminate the chlorosis within the shortest time possible. this balance does not exist at this time in any commercial preparation. This has various causes.

If it is desired to prevent Fe3+ precipitating as $Fe(OH)_3$

$$Ks = \frac{(Fe(OH)_3)}{(Fe)(OH)^3} = 10^{38}$$

at pH higher than 2,5 , $Fe^{3+}$ should be present as chelate.

When $Fe^{2+}$ is added to such a solution, the $Fe^{2+}$ is then oxidised faster to $Fe^{3+}$ than in solutions where no $Fe^3$ chelates are present. The commercial preparations thus contain either $Fe^{3+}$ chelates or $Fe^{2+}$ mineral salts. The advantages and disadvantages have already been pointed out.

It is however possible to retain preparations with free $Fe^{2+}$, chelated $Fe^{2+}$ and chelated $Fe^{3+}$ stable in solution for a relatively long time and thus on the one hand, to achieve the physiological $Fe^{2+}/Fe^{3+}$, and on the other hand to obviate the disadvantages of one-sided formulations. One possible method is :

The iron $^{3+}$ is used as $Fe^{3+}DTPA$ which is more stable than the $Fe^{3+}EDTA$

logK $Fe^3DTPA$ = 29.19

logK $Fe^3EDTA$ = 26.50

The $Fe^{2+}$ is used as $FeSO_4 . 7H_2O$. An amount EDTA $Na_2$ or EDTA $Na_4$ should be added thereto to obtain a part $Fe^2EDTA$. An additional chelate form which reacts preferentially with the possibly formed $Fe^{3+}$, should also be added. By buffering at a pH about 5.0, everything remains stable in solution for several days.

To insure the required stability of the leaf-fertilizing components and force up the biological activity thereof, there is thus started according to the invention from said components, whereby the chelating compounds may be : an aminopolycarbonic acid, for example nitrilo tri-acetic acid and polyaminopolycarbonic acids, for example ethylenediamine tetra-acetic acid and diethylenetriamine penta-acetic acid or the inorganic or organic derivatives thereof ; the hydroxypolycarbonic acids, for example citric acid ; polyhydroxypolycarbonic acids, for example tartaric acid or the inorganic or organic derivatives thereof ; hexitols or polyols ; and any metal salts including boron and molybdenum compounds wherein the metal element is present as cation or anion, or are boron or molybdenum compounds.

It is clear that the invention is in no way limited to the above embodiment and that many changes may be brought therein without departing from the scope of the invention as defined by the appended claims.

## CLAIMS

1. Dry leaf-fertilizing components, which are comprised of a chelating compound of at least one component from the group comprising salts of alkaline metals, alkaline-earth metals and ammonium salts of aminopolycarbonic acids, polyaminopolycarbonic acids, hydroxypolyamino-polycarbonic acids, hydroxypolycarbonic acids, polyhydroxypolycarbonic acids, polyols, with a metal salt wherein the metal element is present as cation or anion, and boron and/or molybednum compounds are present.

2. Leaf-firtilizing components as defined in claim 1, in which use is made as alkaline metal salt of the chelating compound, of a sodium, potassium, caesium or rubidium salt.

3. Leaf-fertilizing components as defined in claim 1, in which use is made as alkaline-earth metal salt of the chelating compound, of a magnesium, calcium, strontium or barium salt.

4. Leaf-fertilizing components as defined in any one of claims 1-3, in which use is made as aminopolycarbonic acid, of a nitrilo tri-acetic acid or a derivative thereof.

5. Leaf-fertilizing components as defined in any one of claims 1-3, in which use is made as polyaminopolycarbonic acid, of ethylenediamine tetra-acetic acid or a derivate thereof.

6. Leaf-fertilizing components as defined in any one of claims 1-3, in which use is made as polyaminopolycarbonic acid, of diethylenetriamine penta-acetic acid or a derivate thereof.

7. Leaf-fertilizing components as defined in any one of claims 1-3, in which use is made as hydroxypolyaminopolycarbonic acid, of hydroxyethylenediamine tri-acetic acid or a derivate thereof.

8. Leaf-fertilizing components as defined in any one of claims 1-3, in which use is made as hydroxypolycarbonic acid, of citric acid or a derivative thereof.

9. Leaf-fertilizing components as defined in any one of claims 1-3, in which use is made as polyhydroxycarbonic acid, of tartaric acid or a derivative thereof.

10. Leaf-fertilizing components as defined in any one of claims 1-3, in which use is made of polyols or derivatives thereof.

11. Leaf-fertilizing components as defined in any one of claims 1-10, in which the metal element is comprised of iron, zinc, manganese magnesium, cobalt, titanium, vanadium, boron, molybdenum or copper.

12. Dry mixtures in any proportion as mentioned above.

13. Dissolved leaf-fertilizing components, which are comprised of at least one chelating compound as defined in any one of claims 1-12 and any salt or salts and water.